Europäisches Patentamt

European Patent Office

Office européen des brevets

(11) Veröffentlichungsnummer: **0 126 847**
A1

## (12) EUROPÄISCHE PATENTANMELDUNG

(21) Anmeldenummer: **84101660.3**

(22) Anmeldetag: **17.02.84**

(51) Int. Cl.³: **B 01 D 39/20**
**C 22 B 9/02, C 04 B 21/00**

(43) Veröffentlichungstag der Anmeldung:
**05.12.84** Patentblatt **84/49**

(84) Benannte Vertragsstaaten:
**AT BE CH DE FR GB IT LI LU NL SE**

(71) Anmelder: **GEORG FISCHER AKTIENGESELLSCHAFT**
**Mühlentalstrasse 105**
**CH-8201 Schaffhausen(CH)**

(72) Erfinder: **Rietzscher, Rolf**
**Brahmsstrasse 13**
**D-402 Mettmann(DE)**

(72) Erfinder: **Otto, Jürgen**
**Finkenstrasse 17**
**D-4320 Hattingen(DE)**

(72) Erfinder: **Trinkl, Gerd**
**Grüssauerstrasse 11**
**D-4280 Borken/Westfalen(DE)**

(72) Erfinder: **Kaettlitz, Wolfgang**
**Neumühlenallee 76**
**D-4280 Borken/Westfalen(DE)**

(54) **Keramikfilter.**

(57) Es wird ein Keramikfilter mit offenzelliger Schaumstruktur mit mindestens einer Anströmfläche zum Filtrieren von Metallschmelzen vorgeschlagen. Um eine zuverlässige Filtration von Eisenschmelzen zu ermöglichen, müssen verschiedene physikalische Parameter aufeinander abgestimmt werden: Die spezifische Filteroberfläche, das Verhältnis der Filteroberfläche zum Filtervolumen und der Druckverlust innerhalb des Filters.

Um eine maximale Durchflussmenge verbunden mit einem erhöhten Reinigungsgrad, zu erzielen, wird der Filter an der Stelle der höchsten kinetischen Energie der zugeführten Schmelze im Einguss angeordnet. Dabei wird der Filter durch das anströmende Metall an ihrer Einströmseite von groben Verunreinigungen freigespühlt, wodurch die vorzeitige Erhöhung des Filterwiderstandes verhindert wird.

Fig. 1

GEORG FISCHER AKTIENGESELLSCHAFT,    8201 Schaffhausen

2423/AM / 15.2.1984 / MS-mw /

**Keramikfilter**

Die vorliegende Erfindung betrifft einen Keramikfilter
mit offenzelliger Schaumstruktur, mit mindestens einer
Anströmfläche, zum Filtrieren von Metallschmelzen.

Auf dem Gebiet der Nichteisenmetalle ist die Filtration
von Schmelzen mit keramischen Schaumfiltern allgemein
bekannt. Besonders bei der Halbzeugfertigung ist ein
hoher Reinheitsgrad erforderlich, weil in den nachfolgenden
Bearbeitungsstufen sehr geringe Schichtdicken erzeugt werden.
Daher müssen feste oder geschmolzene Verunreinigungen bei
der Herstellung aus der Schmelze entfernt werden, weil
sie sonst zu einer beträchtlichen Qualitätsverschlechterung
führen würden. Hier wird seit Jahren keramisches Filtermaterial insbesondere mit Schaumstruktur mit Erfolg eingesetzt.

Aufgabe der vorliegenden Erfindung ist es, diese bekannte
Filtrationsmethode auf Eisenguss zu übertragen. Dabei
geht es insbesondere um die Optimierung der physikalischen
Parameter, damit der eingesetzte Filter den besonderen

- 3 -

Temperatur- und Strömungsanforderungen entspricht.

Diese Aufgabe wird erfindungsgemäss durch Lehre des Anspruches 1 gelöst.

Weitere bevorzugte Ausgestaltungen, gehen aus den abhängigen Ansprüchen hervor.

Anhand der beigelegten Figuren wird nachfolgend ein bevorzugtes Ausführungsbeispiel näher erläutert.

Es zeigen:

Fig. 1        einen Querschnitt durch ein Eingusssystem mit einem Filter,

Fig. 2        einen Querschnitt durch ein Eingusssystem mit beidseitig angeordneten Filtern,

Fig. 3 und 4  zeigen die entsprechenden Längsschnitte und

Fig. 5        zeigt einen Querschnitt durch ein Eingusssystem mit vier Filtern.

Wird flüssiges Eisen durch einen keramischen Filter gegossen, so scheiden sich grobe Verunreinigungen wie Sandkörner, Schlackenteilchen und nichtaufgelöste Impfmittel schon auf der Eingangsseite des Filters ab. Feine Verunreinigungen wie Oxydhäute und ähnliches lagern sich verstärkt in den dahinterliegenden Poren ab. Die groben Verunreinigungen werden vollständig, die feinen dispergierten Verunreinigungen nur teilweise ausfiltriert. Durch den

- : -

Einsatz von feinporigen Filtern kann der Abscheidungsgrad
für feine Verunreinigungen erhöht werden.

Bei magnesiumhaltigen Eisenschmelzen führen aber die
zahlreich vorhandenen MgO- und MgS-Schlacken zu einer
frühzeitigen Verstopfung. Aus diesem Grunde darf der
Filter beispielsweise für die Herstellung von Gussstücken
aus GGG nicht zu feinporig sein.

Beim Vergiessen von Eisenschmelzen, die ja eine wesentlich
höhere Temperatur aufweisen als Aluminiumschmelzen, müssen
an den verwendeteten Filter besondere Anforderungen gestellt
werden. Einerseits muss der Filter den hohen Temperaturen
standhalten bis die Form gefüllt ist, ausserdem muss die
Filtrierwirkung den Qualitätserfordernissen entsprechen.
Zudem müssen die Filterzeiten dem Gussstück angepasst
werden. Dies kann über die spezifische Filteroberfläche
und den Druckverlust innerhalb des Filters gesteuert
werden.

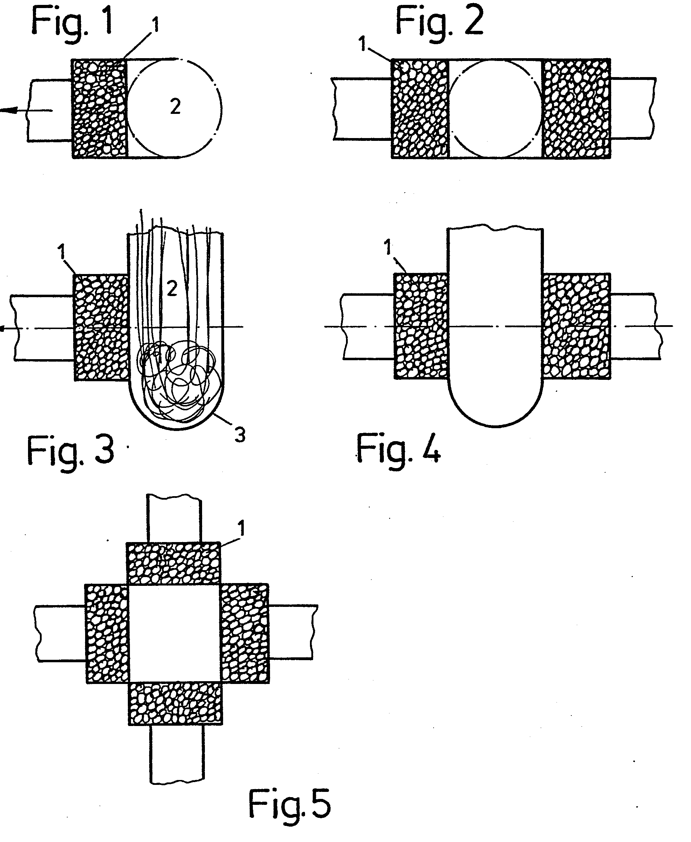

Es wurde nun gefunden, dass zur Gewährleistung einer erhöhten Durchflussrate, z.B. im Bereich von 1'300 bis
5'000 cm3 Schmelze pro cm2 Filterfläche pro Minute,
die physikalischen Parameter wie z.B. die spezifische
Filteroberfläche, das Verhältnis der Filteroberfläche zum
Filtervolumen und der Druckverlust innerhalb des Filters
aufeinander abgestimmt werden müssen. Zusätzlich ist es
notwendig, eine optimale Anordnung des Filters im Giesssystem
vorzusehen, um den strömungstechnischen Gegebenheiten
im Giesssystem Rechnung zu tragen. Daher wird der Filter,
wie es in den Figuren 3 und 4 deutlich zu sehen ist, an
der Stelle angeordnet, an der die kinetische Energie der
einströmenden Schmelze 2 am grössten ist. Der Einguss 3 ist derart ausgestaltet, dass die durch die Ablenkung des
Schmelzstromes 2 auftretende Turbulenz nicht zu gross wird.
Die Turbulenz soll nicht zu stark sein, damit sie keine
zusätzlichen Oxyde und auch keine zusätzlichen nichtmetallischen Einschlüsse bildet, die durch Ausreissen von
Filterpartikeln entstehen können. Andererseits ist eine
gedämpfte Turbulenz direkt vor der Einströmstelle von
Vorteil, weil dadurch die Durchflussgeschwindigkeiten durch
den Filter vor allem im Randbereich erhöht werden, was
zu einem höheren Durchsatz führt. Der höhere Durchsatz,
des an der beschriebenen Stelle verwendeten Filters,
ist auch noch darauf zurückzuführen, dass bei dieser
Anordnung die angeströmte Seite des Filters durch das
anströmende Metall teilweise wieder von groben Verunreinigungen freigespühlt wird und für eine grössere Durchflussmenge offen bleibt. Zusätzlich wird ein Druckabfall im Filter
während des Füllvorganges aufrechterhalten. Durch die
kontinuierliche Freispülung der angeströmten Filterseite
wird nicht nur ein vorzeitiger Druckabfall, wie er durch
Festsetzen der Verunreinigungen an dieser Stelle herbeigeführt wird, verhindert, sondern auch ein vorzeitiges
Verstopfen der angeströmten Filterseite.
Es ist auch möglich im gleichen Einguss mehrere Filter
gleichzeitig vorzusehen, wie das in den Figuren 2 und 3
veranschaulicht wird.

Das Filtrieren von Eisenlegierungen gemäss den beschriebenen
Ausführungen ermöglicht ein einfacheres und kostengünstiges
Giesssystem. Nichtmetallische Verunreinigungen können zuverlässig ausfiltriert werden. Dadurch wird eine deutliche
Qualitätsverbesserung der Gussstücke erzielt.

Ein Filter mit den Abmessungen 50 x 50 x 22 mm auf der Basis von SiC mit 25 % Tonerde und 20 % Monoaluminiumphosphat ist beispielsweise gemäss der Anordnung nach der Fig. 1, in ein Giesssystem eingesetzt worden.

Das Verhältnis der Filteroberfläche zum Filtervolumen betrug 0,09 m2/cm3.

Es wurden auch Versuche gefahren mit dem gleichen Filter, jedoch mit einer dickeren Einschlämmung in den Randbereichen, so dass der Filter ein 2-fach grösseres Raumgewicht im Randbereich auswies als im Innern. Dabei wurde festgestellt, dass diese Filter der erhöhten mechanischen und thermischen Belastung von flüssigen Eisen standhielten.

<u>P a t e n t a n s p r ü c h e</u>

2423/AM

1. Keramikfilter mit offenzelliger Schaumstruktur auf der Basis von hochschmelzender Keramik wie z.B. SiC, $Al_2O_3$, $SiO_2$ mit mindestens einer Anströmfläche zum Filtrieren von Metallschmelzen gekennzeichnet durch ein veränderbares Raumgewicht von Teilbereichen des Filters und einem Verhältnis der Filteroberfläche zum Filtervolumen von 0,0003 bis 9 m2/cm3, durch einen spezifischen Filterwiderstand von 0,1 bis 0,9 bar · cm bei einer Wasserdurchflussmenge von 5 m3/h und durch einen Druckverlust in Abhängigkeit vom spezifischen Widerstand $\rho$ der Filterstärke $\ell$ und der Durchtrittsfläche F gemäss der Formel $\Delta p = \rho \times \dfrac{\ell}{F}$.

2. Keramikfilter nach Anspruch 1, dadurch gekennzeichnet, dass er 20 - 70 % Siliciumcarbid, 10 - 40 % Tonerde, 2 - 20 % $SiO_2$ und 10 - 30 % eines hochfeuerfesten anorganischen Binders wie Monoaluminiumphosphat und/oder Monochromphosphat aufweist.

3. Keramikfilter nach Anspruch 2, dadurch gekennzeichnet, dass er 30 - 60 % Siliciumcarbid, 10 - 30 % Tonerde aufweist.

4. Keramikfilter nach Anspruch 1, dadurch gekennzeichnet, dass das Verhältnis der Filteroberfläche zum Filtervolumen 0,01 - 0,9 m2/cm3 beträgt.

5. Keramikfilter nach Anspruch 1, dadurch gekennzeichnet, dass der spezifische Filterwiderstand 0,4 bar · cm beträgt.

6. Keramikfilter nach Anspruch 1, dadurch gekennzeichnet, dass die Anströmfläche einen offenen Flächenanteil zwischen 35 - 95 %, vorzugsweise 70 - 95 %, aufweist.

7. Keramikfilter nach Anspruch 1, dadurch gekennzeichnet, dass das Raumgewicht in den Randbereichen des Filters das 1,2 bis 10-fache des Raumgewichtes im Innenbereich des Filters beträgt, um die thermische und mechanische Belastbarkeit während des Giessvorganges zu erhöhen.

8. Keramikfilter nach Anspruch 7, dadurch gekennzeichnet, dass die Erhöhung des Raumgewichtes in den Randbereichen durch mechanische Mittel erfolgt, z.B. durch Verwendung eines Rahmens.

9. Keramikfilter nach Anspruch 7, dadurch gekennzeichnet, dass der Rahmen aus einem, feuerfesten gekörnten Stoff, der organisch gebunden ist, oder aus Metall besteht.

10. Keramikfilter nach Anspruch 7, dadurch gekennzeichnet, dass die Erhöhung des Raumgewichtes in den Randbereichen während der Herstellung erfolgt, z.B. durch Nachbehandeln wie Sprühen oder Tauchen vor oder nach dem Brennen.

11. Verwendung des Keramikfilters nach den Ansprüchen
    1 bis 10, dadurch gekennzeichnet, dass der Filter
    an der Stelle angeordnet ist, an der die zugeführte
    Schmelze die höchste kinetische Energie besitzt,
    derart, dass die Schmelze zunächst an der Anströmfläche des Filters vorbeifliesst (Fig. 1 und 3).

12. Verwendung des Filters nach Anspruch 11, dadurch gekennzeichnet, dass die Schmelze in einer im wesentlichen parallelen Richtung an der Anströmfläche des
    Filters vorbeigeführt und umgelenkt wird, so dass
    unmittelbar vor dem Einströmen der Schmelze in
    den Filter eine Turbulenz erzeugt wird.

13. Verwendung des Filters nach Anspruch 11, dadurch gekennzeichnet, dass die angeströmte Filterfläche
    in Bezug auf die Anströmrichtung um 0 bis 90 $^{\circ}$, vorzugs-
    weise 0 - 79 $^{\circ}$, geneigt angeordnet ist.

14. Verwendung des Filters nach den Ansprüchen 10 bis 13,
    dadurch gekennzeichnet, dass der Druckabfall in
    Strömungsrichtung des Filters während des Giessvorganges aufrechterhalten wird, so dass die dabei
    abfallende Giessgeschwindigkeit zu einem höheren
    Ausscheidungsgrad, der noch vorhandenen feinen Ver-
    unreinigungen, führt.

Fig. 1

Fig. 2

0126847

Fig. 3

Fig. 4

Fig. 5

2423/AM

Europäisches Patentamt

**EUROPÄISCHER RECHERCHENBERICHT**

**0126847**
Nummer der Anmeldung

EP 84 10 1660

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | AT-B- 342 618 (H. UCHIYAMA et al.) <br> * Anspruch 1, Seite 2 * | 1 | B 01 D 39/20 <br> C 22 B 9/02 <br> C 04 B 35/56 <br> C 04 B 21/00 |
| A | DE-A-2 613 023 (SCHWEIZERISCHE ALUMINIUM AG) <br> * Ansprüche 1,9; Seite 10; Seite 57 Absatz 2; Figuren 2,5,7, Position 12 * | 1,2,6, 11-13 | |
| A | DE-A-2 932 614 (BRIDGESTONE TIRE) <br> * Anspruch 1; Position 4 * | 1,6-9 | |
| A | DE-A-2 942 042 (BRIDGESTONE TIRE) <br> * Anspruch 1; Position 6 * | 1,6-9 | |
| A | WO-A-8 203 339 (GEORG FISCHER AG) <br> * Ansprüche 1,3,4,8,9,11; Seiten 3-4 * | 1 | RECHERCHIERTE SACHGEBIETE (Int. Cl. 3) <br><br> B 01 D 35/22 <br> B 01 D 39/20 <br> B 22 D 1/00 <br> C 04 B 21/00 <br> C 04 B 35/56 <br> C 22 B 9/02 <br> C 22 B 21/06 |
| A | DE-A-2 848 005 (SCHWEIZERISCHE ALUMINIUM AG) <br> * Ansprüche 1,8 * | 1 | |
| A | DE-A-2 838 504 (SCHWEIZERISCHE ALUMINIUM AG) <br> * Anspruch 2, Figur 1 * <br><br> --- -/- | 1,8 | |

Der vorliegende Recherchenbericht wurde für alle Patentansprüche erstellt.

| Recherchenort | Abschlußdatum der Recherche | Prüfer |
|---|---|---|
| BERLIN | 14-09-1984 | KUEHN P |

Europäisches
Patentamt

**EUROPÄISCHER RECHERCHENBERICHT**

**0126847**
Nummer der Anmeldung

EP 84 10 1660

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 139 568 (MORGAN REFRACTORIES) * Ansprüche 1,2,6 * | 2,3 | |
| A | Patent Abstracts of Japan Vol. 7, Nr. 232, 14 Oktober 1983 & JP-A-58-122016 | 2 | |
| A | DD-A- 157 (F. AUER) * Anspruch, Figur * | 8 | |
| A | DE-A-2 227 029 (KAISER ALUMINIUM) * Figur 6 * | 13 | |
| A | DE-A-2 921 871 (SELWIG & LANGE) * Figur 1 * | 11-13 | |

RECHERCHIERTE
SACHGEBIETE (Int. Cl. ³)

Der vorliegende Recherchenbericht wurde für alle Patentansprüche erstellt.

| Recherchenort BERLIN | Abschlußdatum der Recherche 14-09-1984 | Prüfer KUEHN P |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82